# EUROPEAN PATENT APPLICATION

(11) **EP 1 878 557 A1**
(43) Date of publication of application: **16.01.2008**
(21) Application number: 06425487.3
(22) Date of filing: 14.07.2006
(51) Int. Cl.: B29C 45/82, F15B 11/00

(54) **Injection press control circuit**

(71) Applicant: Sandretto Industrie S.r.l., 10095 Grugliasco (IT)
(72) Inventor: Ferrero, Biagio, 10091 Alpignano (IT)
(74) Representative: D'Angelo, Fabio

(57) **Abstract**

An injection press control circuit (1, 1', 1") is described, comprising a motor (13, 14) connected to a first conduit (20; 23) acting as suction line and feeding the motor (13, 14) with a fluid at a first pressure, and to a second (23; 24) conduit (20, 21; 23, 24) acting as delivery conduit and fed by the motor (13, 14) with the fluid at a pressure value higher than the first value; and two fluidic connection assemblies (15, 16, 17, 18, 19) adapted to actuate a mobile member (2, 3, 4, 5, 7) of the press; each group (15, 16, 17, 18, 19) comprising a first and a second fluidic line (35, 36), crossable by the fluid at different pressure values and connectable to portions (11, 12) of the mobile member (15, 16, 17, 18, 19); the first (20; 23) of the conduits (20, 21; 23, 24) is connected to the first lines (35) of both the connection assemblies (15, 16, 17, 18, 19) and the second (21; 24) of conduits (20, 21; 23, 24) is connected to the second lines (36) of both connection assemblies (15, 16, 17, 18, 19) to create a pressure gradient between the lines (35, 36) of the connection assembly (15, 16, 17, 18, 19) and between the portions (11, 12) of the mobile member (2, 3, 4, 5, 7).

## Description

The present invention relates to an injection press control circuit.

Injection presses adapted to make a product of a predetermined shape by solidifying material in molten state in an injection cavity, whose shape is complementary to that of the product being made, are known.

More precisely, injection presses of the known type comprise a plurality of actuators, each of which is associated to a respective mobile part of the press.

Such mobile parts comprise, for example, a pair of half-moulds mobile between an open configuration and a closed configuration in which they delimit the injection cavity, and a conveying assembly adapted to define a conveying path of the material in the molten state within the injection cavity itself; such mobile parts may also comprise an injection assembly adapted to feed the material in molten state within the conveying assembly, and an extractor assembly adapted to allow the extraction of the finished product, once the material contained in the injection cavity is completely solidified.

During the working cycle of the press, the aforesaid actuators are moved in a predetermined sequence so as to allow the definition of the injection cavity, the filling of the same with molten material and the subsequent extraction of the product.

In order to ensure a precise and repeatable performance of the aforesaid working cycle, the injection presses also comprise a control circuit adapted to move, during the aforesaid operative cycles, the actuators according to the aforesaid predetermined sequence.

More in detail, the control circuit comprises a plurality of hydraulic motors, each of which is operatively connected, via a respective fluidic connection assembly, to a respective actuator.

More precisely, each hydraulic motor comprises a suction line of a fluid at a first pressure value and a delivery line of the aforesaid fluid at a second pressure higher than the aforesaid pressure.

Each fluidic connection assembly comprises a pair of fluidic lines, which are connectable, on one side, to respective distinct positions of the respective actuators and are fluidically connected on the opposite side, to the delivery line and to the suction line of the respective hydraulic motor, respectively.

In this way, each hydraulic motor can be actuated so as to feed the fluid with different pressures to the fluidic lines of the respective connection assembly and generate a difference of pressure between the aforesaid portions of the corresponding actuator, which determines the displacement of the actuator itself.

It is felt in the sector the need to reduce energy consumption and the construction and maintenance complexity of the control circuits of the known type, while making high pressures repeatably and accurately available to the fluidic lines.

It is the object of the present invention to make an injection press control circuit, which allows to simply and cost-effectively satisfy the needs related to control circuits for injection presses of the known type and specified above.

The aforesaid object is reached by the present invention in that is relates to an injection press control circuit assembly comprising:
- at least one motor fluidically connected to two conduits; a first of said conduits being the suction line and feeding said motor with a fluid available at a first pressure, and a second of said conduits acting as delivery conduit and being fed by said motor with said fluid available at a second pressure higher than said first value; and
- at least two fluidic connection assemblies each adapted to move a respective mobile member of said press; each assembly comprising a first and a second fluidic line, which are crossable by said fluid at respective pressure values and are operatively connectable to respective portions of said mobile member;
characterised in that said first conduit is fluidically connected to said first lines of both said connection assemblies and said second conduit is fluidically connected to said second lines of both said connection assemblies so as to create a pressure gradient between said first and second line of each said connection assembly and between said portions of said respective mobile member.

For a better understanding of the present invention, a preferred embodiment will now be described only by way of non-limitative example, and with reference to the accompanying drawings, in which:
- figure 1 shows a system diagram of an injection press control circuit made according to the present invention;
- figure 2 shows a system diagram of a second embodiment of the control circuit in figure 1; and
- figure 3 shows a system diagram of a third embodiment of the control circuit in figure 1 and 2.

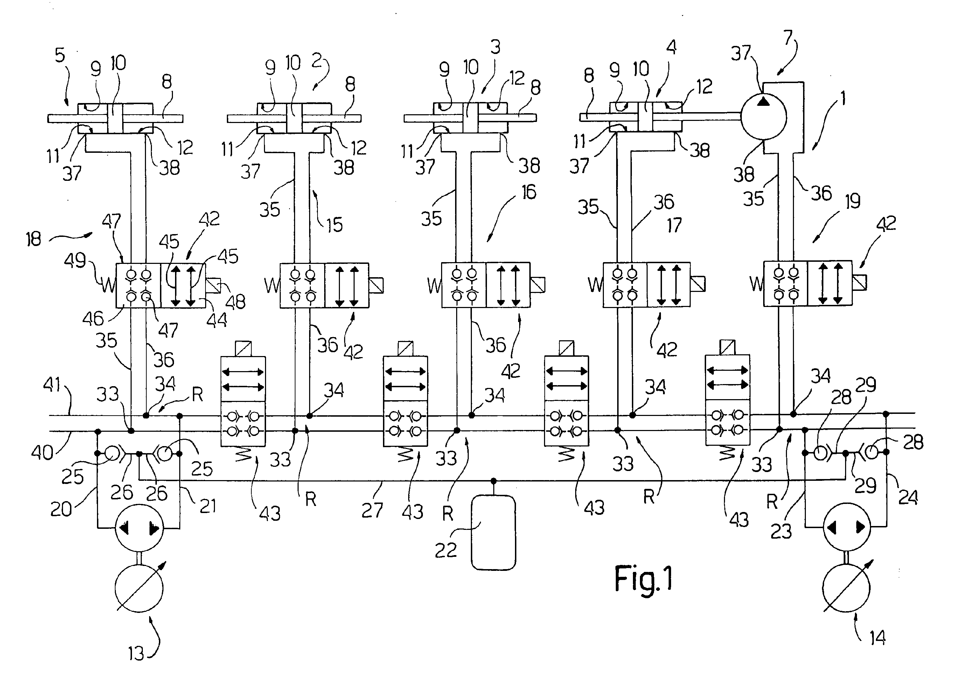

With reference to figure 1, number 1 indicates an injection press control circuit made according to the invention.

The injection press is shown limited to a plurality of actuators, four in the illustrate case in point, indicated by 2, 3, 4 and 5 which are adapted to control respective mobile axes of the press.

Each actuator 2, 3, 4, 5 comprises a stem 8, which is axially and slidingly mobile within a lining 9 and is provided with a ridge 10 externally cooperating with an internal surface of the lining 9 so as to fluid-tightly separate two chambers 11, 12 of the lining 9 itself.

In the illustrated case in point, actuators 2 and 3 are adapted to command mobile axes of the press respectively associated to a pair of half-moulds envisaged to define an injection cavity, and a conveying assembly adapted to define a conveying path of material in molten state into the injection cavity.

Actuators 4, 5 are adapted to command mobile axes of the press respectively associated to an injection assembly adapted to inject the molten material within the conveying assembly, and an extractor assembly adapted to allow the extraction of a product made by solidification of the material in molten state within the injection cavity.

Actuator 4 is also associated to a hydraulic motor 7 controlling the revolution of a mobile member (intrinsically know and not shown) of a plasticizer (intrinsically known and not shown), which is intended to melt the material intended to be injected in the injection cavity.

In greater detail, circuit 1 comprises a pair of pumps 13, 14 of the hydraulic type, and a plurality of fluidic connection assembles, five in the illustrated case in point indicated by 15, 16, 17, 18, 19, respectively adapted to move actuators 2, 3, 4, 5 and hydraulic motor 7, by operating pumps 13, 14, as described below in the present description.

Pumps 13, 14 are of the hydraulic type and turn about respective axes (not shown).

More precisely, pump 13 is fluidically connected to a pair of conduits 20, 21, which are in turn connected to a fluid accumulator 22.

When pump 13 turns in a first direction, conduit 20 acts as suction line, while conduit 21 acts as delivery line.

Thus, pump 13, when turning in the first direction, is fed by conduit 20 with fluid available at a first pressure and sends the fluid into conduit 21 at a second pressure higher than the aforesaid first pressure.

When pump 13 turns in a second direction, conduit 21 acts as suction line, while conduit 20 acts as delivery line.

Thus, pump 13, when turning in the second direction, aspirates the fluid from conduit 21 at a first pressure and sends the fluid into conduit 20 at a second pressure value than the aforesaid first value.

Conduits 20, 21 are fluidically connected to accumulator 22; in particular, two check valves 25 are arranged along respective conduits 26 exiting from conduits 20, 21 and connecting the conduits 20, 21 themselves to a conduit 27 fluidically connected to accumulator 22.

More precisely, check valves 25 are envisaged to avoid that, following the operation of pump 13 and the consequent vacuum generated in conduit 20, 21 acting as suction conduit, air bubbles are generated in conduit 20, 21 acting a suction conduit.

Pump 14 is fluidically connected to a pair of conduits 23, 24, which are in turn connected to fluid accumulator 22.

When pump 14 turns in a first direction, conduit 23 acts as suction line, while conduit 24 acts as delivery line.

Thus, pump 14, when turning in the first direction, aspirates the fluid from conduit 23 at a first pressure value and sends the fluid into conduit 24 at a second pressure value than the aforesaid first value.

When pump 14 turns in a second direction, conduit 24 acts as suction line, while conduit 23 acts as delivery line.

Therefore, pump 14, when turning in the first direction, aspirates the fluid from conduit 24 at a first pressure and sends the fluid into conduit 23 at a second pressure value higher than the aforesaid first value.

Conduits 23, 24 are fluidically connected to accumulator 22; in particular, two check valves 28 are arranged along respective conduits 29 exiting from each conduit 23, 24 and connecting the conduits 23, 24 themselves to conduit 27.

More precisely, check valves 28 are envisaged to avoid that, following the operation of pump 14 and the consequent vacuum generated in conduit 23, 24 acting as suction conduit, air bubbles are generated in conduit 23, 24 itself acting a suction conduit.

Connection assembly 15 comprises a pair of fluidic lines 35, 36 crossable by the fluid at respective pressures; more precisely, line 35 has a first end 37 facing within chamber 11 of actuator 2 while line 36 presents a first end 38 facing within chamber 12 of actuator 2.

In such a way, lines 35, 26, when fully crossed by the fluid, feed the pressurised fluid respectively against a wall of projection 10 facing chamber 11 and against a wall of projection 10 facing chamber 12.

Connection assemblies 16, 17, 18 are identical to connection assembly 15 and, for the sake of simplicity, are not described.

Connection assembly 19 is similar to connection assembly 15 but differs from it in that lines 35, 36 are both connected, at ends 37, 38, to respective chambers (not shown) of hydraulic motor 7 to make the fluid itself available to each of said chambers at a respective pressure value.

Advantageously, conduits 20, 23 are fluidically connected to lines 35 of connection assemblies 15, 16, 17, 18, 19, and conduits 21, 24 are fluidically connected to lines 36 of connection assemblies 15, 16, 17, 18, 19 so as to create a pressure gradient between lines 35, 36 of each connection assembly 15, 16, 17, 18, 19, and between chambers 11, 12 of respective actuator 2, 3, 4, 5 and between the chambers of hydraulic motor 7.

In greater detail, circuit 1 comprises a pair of fluid distribution lines 40, 41, which, in normal operating conditions of pumps 13, 14 are arranged, with reference to an advancement direction of the fluid, downstream of pumps 13, 14 themselves and upstream of connection assemblies 15, 16, 17, 18, 19.

More precisely, line 40 is fluidically connected to conduits 20, 23 and to lines 35 of each connection assembly 15, 16, 17, 18, 19 while line 41 is connected to lines 21, 24 and to lines 36 of each connection assembly 15, 16, 17, 18, 19.

In particular, each line 35 is fluidically connected to a respective line 40 at an end 33 opposite to end 37, while each line 36 is fluidically connected to the respective line 41 at an end 34 opposite end 38.

Circuit 1 also comprises a plurality of shut-off valves 42 each of which is associated to a respective connection assembly 15, 16, 17, 18, 19; more precisely, each valve 42 is selectively available in a first operative position (not shown in figure 1), in which it allows the fluid present in lines 40, 41 to full cross lines 35, 36 of the respective connection assembly 15, 16, 17, 18, 19, and in a second operative position (shown in figure 1), in which it prevents the fluid present in lines 40, 41 to fully crossing lines 35, 36 of the respective connection assembly 15, 16, 17, 18, 19.

Thus, when valve 42 corresponding to a first connection assembly 15, 16, 17, 18 is arranged in the first operative position, the fluid can fully cross both lines 35, 36 of the corresponding connection assembly 15, 16, 17, 18; in this way, lines 35, 36, feed the aforesaid fluid, by means of respective ends 37, 38, at different pressure values, in respective chambers 11, 12 of corresponding actuator 2, 3, 4, 5 until two different pressures are present in chambers 11, 12, which generate the displacement of corresponding actuator 2, 3, 4, 5.

Similarly, when valve 42 associated to the first connection assembly 19 is arranged in the first operative position, lines 35, 36 of connection assembly 19 are fully crossed by fluid at different pressures; in such a way, the fluid is made available to hydraulic motor 7 at two different pressures.

Conversely, when valve 42 is arranged in the second operative position, the flow of fluid along lines 35, 36 is interrupted and the fluid itself cannot fully fill lines 35, 36 of the corresponding connection assembly 15, 16, 17, 18, 19.

Thus, the fluid does not reach ends 37, 38 and cannot fill chambers 11, 12 of corresponding actuator 2, 3, 4, 5.

Similarly, the fluid cannot be made available to hydraulic motor 7.

In particular, each valve 42 is arranged in interposed position between ends 37, 38 of lines 35, 36 and ends 33, 34 of lines 35, 36 themselves of a respective connection assembly 15, 16, 17, 18, 19.

Circuit 1 also comprises a plurality of further shut-off valves 43, four in the illustrated case in point; more precisely, each valve 43 is interposed between two regions R, where lines 40, 41 are fluidically connected to ends 33, 34 of lines 35, 36 of two immediately and reciprocally adjacent connection assemblies 15, 16, 17, 18, 19.

In particular, each valve 43 is interposed between line 36 of a connection assembly 15, 16, 17, 18, 19 and line 35 of the immediately adjacent connection assembly 15, 16, 17, 18, 19.

Each valve 43 is available in a first configuration (not shown in figure 1), in which it stops the fluid from flowing along lines 40, 41 between the aforesaid two immediately and reciprocally adjacent regions R, and a second operative position, in which it allows the fluid to flow along lines 40, 41 between the aforesaid two regions R.

Valves 42, 43 are identical and of the known type, and each comprises (as shown in figure 1 for one of the valves 42 only), in extreme brevity, a respective first chamber 44 accommodating a pair of conduits 45, a respective second chamber 46 accommodating two pair of reciprocally counterpoised fluidic check elements 47, and a respective control button 48 selectively actuated by a control unit (not shown).

Each valve 42, 43 also comprises a respective spring 49 loaded so as to maintain the fluidic elements 47 of the second chamber 46 in fluidic connection to the fluidic lines, along which valve 42, 43 is inserted, and to arrange the first chamber 44 in non-interfering position with the aforesaid fluidic lines.

The actuation of button 48 of each valve 42, 43 compresses the respective spring 49 so as to take the second chamber 46 in non-interfering position with the fluidic insertion lines and to connect conduits 45 of the first fluidic connection chamber 44 to the aforesaid fluidic lines.

In use, circuit 1 moves actuators 2, 3, 4, 5 and hydraulic motor 7 according to a predetermined sequence, which is associated to an operative cycle of the press.

More precisely, circuit 1 allows to move at high speed one of the actuators 2, 3, 4, 5 and hydraulic motor 7 without operating the remaining actuators 2, 3, 4, 5 and hydraulic motor 7; circuit 1 also allows to move, at the same time and at high speed, either two of actuators 2, 3, 4, 5 or hydraulic motor 7 and one of actuators 2, 3, 4, 5.

By the way of example, in order to move actuator 2 and keep the other actuators 3, 4, 5 and hydraulic motor 7 stationary, the control unit is operated, from the configuration shown in figure 1, so as to arrange in the respective first operative position both valve 42 associated to connection assembly 15 and valve 43 arranged on lines 40, 41 in position interposed between line 36 of connection assembly 18 and line 35 of connection assembly 15.

Subsequently, by operating pump 13 in the first direction of revolution, conduit 20 acts as suction line, while conduit 21 acts as delivery line. Thus, the pressure in conduit 21 is higher than the pressure in conduit 20.

In this way, the fluid flows along a portion of line 41 comprised between the intersection point of conduit 21 and line 41 and the end 34 of line 36 of the connection assembly 15 and, from here, along the entire line 36 of connection assembly 15, at a pressure associated to the pressure present in conduit 21; at the same time, the fluid flows along a portion of line 40 comprised between the intersection point of conduit 20 and line 40 and the end 33 of line 35 of connection assembly 15 and, from here, along the entire line 35 of connection assembly 15 at a pressure associated to the pressure present in conduit 20.

Thus, the pressure in chamber 12 of actuator 2 is higher than the pressure in chamber 11 of actuator 2 itself, and, consequently, actuator 2 moves towards actuator 5. Similarly, by operating pump 13 in the second direction of revolution, actuator 2 is moved towards actuator 3.

In both cases, the movement of actuators 3, 4, 5 and of hydraulic motor 7 is prevented by the fact that valves 42 associated to connection units 16, 17, 18, 19 are arranged in their second operative position.

If one wants to interrupt the actuation of actuator 2, it will suffice to operate the control unit so as to arrange valve 42 associated to connection assembly 15 in the second operative position preventing the fluid from reaching chambers 11, 12 of the actuator 2 itself.

Furthermore, thanks to the presence of two pumps 13, 14, circuit 1 allows to actuate at the same time and at high speed either two actuators 2, 3, 4, 5 or either one of actuators 2, 3, 4, 5 and hydraulic motor 7.

For example, if one wants to move at high speed and at the same time actuators 2 and 4, the control unit is operated, from the movement configuration of actuator 2 described above, so as to arrange in the respective first operative positions both valve 42 associated to connection assembly 17 and valve 43 arranged between line 36 of connection assembly 17 and line 35 of connection assembly 19.

By operating pump 14 in a first direction of revolution, conduit 23 acts as suction line and conduit 24 acts as delivery line. Thus, the pressure in conduit 24 is higher than that in conduit 23.

In such a way, the fluid flows, at a pressure value associated to the pressure value present in conduit 24, along a portion of line 41 comprised between end 34 of line 36 of connection assembly 17 and the intersection point of conduit 24 and line 41 and, from here, along the entire line 36 of connection assembly 17; at the same time, the fluid flows, at a pressure value associated to pressure value present in conduit 23, along a portion of line 40 comprised between end 33 of line 35 of connection assembly 17 and the intersection point of conduit 23 and of line 40 and, from here, along the entire line 35 of connection assembly 17.

Thus, the pressure in chamber 12 is higher than the pressure in chamber 11, and actuator 4 moves at the same time as actuator 2 and on the opposite side with respect to actuator 3.

Similarly, actuator 4 may be moved towards actuator 2 by operating pump 14 in the second direction of revolution.

It is important to stress that circuit 1 allows to operate at the same time also all actuators 2, 3, 4, 5 and hydraulic motor 7 although at reduced speed.

In order to operate all actuators 2, 3, 4, 5 and hydraulic motor 7 at the same time, the control unit is operated so as to arrange, from the configuration shown in figure 1, all valves 42 and all valves 43 in the respective first operative position.

It is apparent that by appropriately acting on valves 42, 43, it is possible to operate any number of actuators 2, 3, 4, 5 and hydraulic motor 7 with one of the pumps 13, 14, and the remaining actuators 2, 3, 4, 5 and hydraulic motor 7 with the other pump 13, 14

It is also apparent that, by appropriately acting on valves 42, 43, it is possible to fluidically connect only one of the actuators 2, 3, 4, 5 and hydraulic motor 7 to both pumps 13, 14, thus considerably increasing the speed of movement of actuator 2, 3, 4, 5 or of the moved hydraulic motor 7.

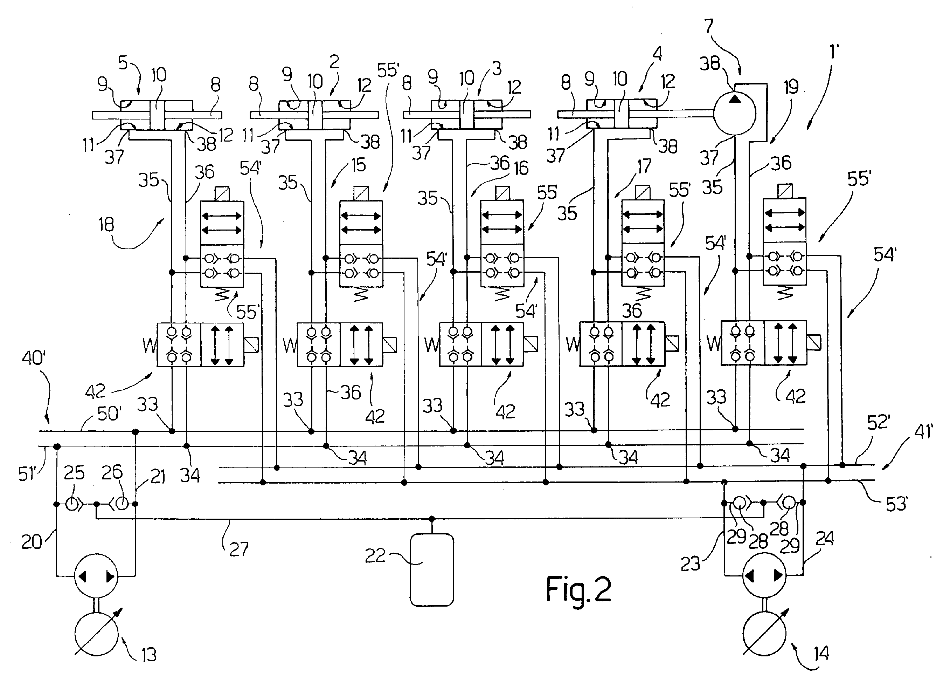

With reference to figure 2, 1' indicates as a whole an injection press control circuit according to a different embodiment of the present invention.

Circuit 1' is similar to circuit 1 and only the differences thereof will be described; corresponding or equivalent parts of assembly 1 and 1' will be indicated where possible by the same reference numbers.

In greater detail, circuit 1' differs from circuit 1 in that it comprises, a first pair 40' of fluid distribution fluidic lines 50', 51' and a second pair 41' of fluid distribution fluidic lines 52', 53', instead of lines 40, 41.

Pair 40', in normal conditions of operation of pump 13 and with reference to a direction of advancement of the fluid, is arranged downstream of the pump 13 itself and upstream of connection assemblies 15, 16, 17, 18, 19.

More precisely, line 50' is fluidically connected to conduit 21 and to lines 35 of each connection assembly 15, 16, 17, 18, 19, while line 51' is fluidically connected to conduit 20 and to lines 36 of each connection assembly 15, 16, 17, 18, 19.

Similarly, pair 41', in normal conditions of operation of pump 14 and with reference to a direction of advancement of the fluid, is arranged downstream of the pump 14 itself and upstream of connection assemblies 15, 16, 17, 18, 19.

More precisely, line 52' is fluidically connected to conduit 24 and to lines 36 of each connection assembly 15, 16, 17, 18, 19, while line 53' is fluidically connected to conduit 23 and to lines 35 of each connection assembly 15, 16, 17, 18, 19.

Each connection assembly 15, 16, 17, 18, 19 is fluidically connected to lines 52', 53' by means of a respective pair 54' of fluidic lines, one of which is connected at opposite ends, to a respective line 35 and to line 53' while the other is connected, at opposite ends, to respective line 36 and line 52'.

More precisely, each line 35, 36 is fluidically connected to a respective fluidic line of the respective pair 54' in intermediate position between the respective end 37, 38 and valve 42 associated to the respective connection assembly 15, 16, 17, 18, 19.

Circuit 1' also comprises a plurality of valves 55' whose shape and operation is similar to valves 42, 43.

More precisely, each valve 55' is available in a first operative position (not shown in figure 2) which allows the flow of fluid, through the respective pair 54' of fluidic lines, between lines 52', 53' and the respective connection assembly 15, 16, 17, 18, 19, and in a second operating position (shown in figure 2), in which it stops the flow of fluid through the respective pair 54' of fluidic lines, between lines 52', 53' to the respective connection assembly 15, 16, 17, 18, 19.

The operation of circuit 1' differs from that of circuit 1 in that pump 13 sends pressurised fluid to connection assemblies 15, 16, 17, 18, 19 through pair 40' of fluidic lines 50', 51' while pump 14 sends pressurised fluid to connection assemblies 15, 16, 17, 18, 19 through pair 41' of fluidic lines 52', 53'.

Subsequently, the fluid present in pair 40' of fluidic lines 50', 51' reaches each of connection assemblies 15, 16, 17, 18, 19 and corresponding actuator 2, 3, 4, 5 and hydraulic motor 7 through a single respective valve 42.

Similarly, the fluid present in pair 41' of fluidic lines 52', 53' reaches each of connection assemblies 15, 16, 17, 18, 19 and corresponding actuator 2, 3, 4, 5 and hydraulic motor 7 through a single respective valve 55' arranged along a respective pair 54' of fluidic lines.

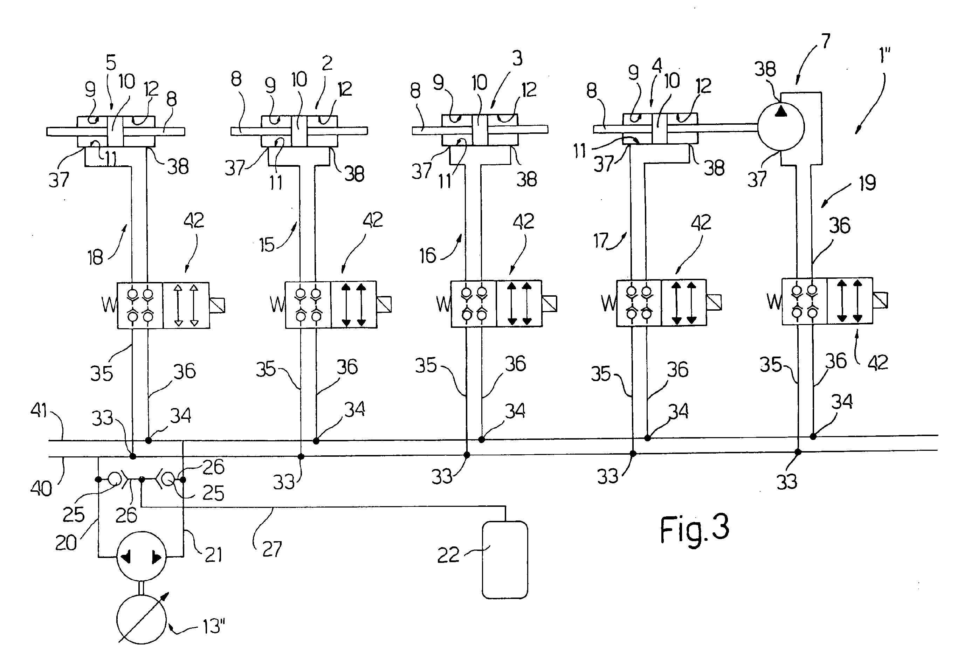

With reference to figure 3, 1" indicates as a whole an injection press control circuit according to a different embodiment of the present invention.

Circuit 1" is similar to circuit 1 and only the differences thereof will be described; corresponding or equivalent parts of assembly 1 and 1" will be indicated where possible by the same reference numbers.

In particular, circuit 1" comprises a single pump 13" and does not comprise valve 43.

The operation of circuit 1" is similar to the operation of circuit 1 and therefore not described.

From an examination of the features of the circuit 1, 1', 1" made according to the present invention there are apparent the advantages that they allow to obtain.

In particular, circuit 1, 1', 1" allows to move at high speed and accuracy actuators 2, 3, 4, 5 and hydraulic motor 7 being, at the same time, of reduced construction and maintenance complexity.

Indeed, unlike the control circuits of the known type, control circuit 1, 1', 1" has fewer pumps than the number of actuated mobile members of the press i.e. than the number of actuators 2, 3, 4, 5, and hydraulic motor 7.

The lower number of pumps 13, 14 reduces energy consumption and facilitates control circuit maintenance.

Circuit 1, 1', 1" also controls the movement of actuators 2, 3, 4, 5 the feeding of hydraulic motor 7 exclusively by operating pumps 13, 14 or, in the case of circuit 1', of the single pump 13" . In such a way, systems for adjusting the actuation of actuators 2, 3, 4, 5 of the dissipative type are not required, with consequent improvement of energy efficiency of circuit 1, 1', 1" itself and reduction of energy consumptions.

Furthermore, circuit 1, 1' , while having fewer pumps 13, 14 than actuated mobile members allows to move at the same time at least two of the aforesaid mobile members at high speed and with high accuracy.

Circuit 1' is advantageous with respect to circuit 1, because the fluid, in order to reach from pump 13 to each connection assembly 15, 16, 17, 18, 19, must cross a single respective valve 42; similarly, the fluid, to reach from pump 14 to each connection assembly 15, 16, 17, 18, 19, must cross a single respective valve 55'.

In such a way, the loss of fluid pressure is sensibly reduced with consequent improvement of energy efficiency of circuit 1'.

Finally, circuit 1" is advantageous with respect to circuits 1, 1' because it allows to actuate actuators 2, 3, 4, 5 and hydraulic motor 7 itself with a single pump 13" thus reducing energy consumption and dimensions of circuit 1" itself.

It is apparent that changes and variations can be made to circuit 1, 1', 1" of the invention without departing from the scope of protection of the claims.

## Claims

1. An injection press control circuit (1, 1', 1") comprising:
at least one motor (13, 14) fluidically connected to two conduits (20, 21; 23, 24); a first (20; 23) of said conduits (20, 21; 23, 24) acting as suction line and feeding said motor (13, 14) with a fluid available at a first pressure, and a second (21; 24) of said conduits (20, 21; 23, 24) acting as delivery conduit and being fed by said motor (13, 14) with said fluid available at a second pressure higher than said first value; and
- at least two fluidic connection assemblies (15, 16, 17, 18, 19) each adapted to actuate a respective mobile member (2, 3, 4, 5, 7) of said press; each assembly (15, 16, 17, 18, 19) comprising a first and a second fluidic line (35, 36), which are crossable by said fluid at respective pressure values and are operatively connectable to respective portions (11, 12) of said mobile member (15, 16, 17, 18, 19);
**characterised in that** said first conduit (20; 23) is fluidically connected to said first lines (35) of both said connection assemblies (15, 16, 17, 18, 19) and said second conduit (20, 21; 23, 24) is fluidically connected to said second lines (36) of both said connection assemblies (15, 16, 17, 18, 19) so as to create a pressure gradient between said first (35) and second line (36) of each said connection assembly (15, 16, 17, 18, 19) and between said portions (11, 12) of said respective mobile member (2, 3, 4, 5, 7).

2. A circuit according to claim 1, **characterised in that** it comprises at least one valve element (42) selectively available in a first operative position, in which it allows the flow of said fluid along said first and second fluidic line (35, 36) of a same connection assembly (15, 16, 17, 18, 19) and creates said pressure gradient between said portions of the corresponding mobile member (2, 3, 4, 5, 7); and in a second operative position, in which it interrupts the flow of said fluid along said first (35) and second fluidic line (36) of said same connection assembly (2, 3, 4, 5, 7) functionally uncoupling said motor (13, 14) and said corresponding mobile member (2, 3, 4, 5, 7).

3. A circuit according to claim 1 or 2, of the type comprising at least two motors (13, 14), **characterised in that** it comprises a first fluidic distribution element (40) of said fluid fluidically connected to said first fluidic lines (35) of said connection assemblies (15, 16, 17, 18, 19) and to said first conduit (20; 23) of each said motor (13; 14); and a second fluidic distribution element (41) fluidically connected to said second fluidic lines (36) of said connection assemblies (15, 16, 17, 18, 19) and to said second conduit (21; 24) of each said motor (13; 14).

4. A circuit according to claim 3, **characterised in that** it comprises at least one further valve element (43) selectively available in a first operative position, in which it allows the flow of said fluid along said first and second fluidic distribution element (40, 41), and a second operative position, in which it interrupts the flow of said fluid along said first and second fluidic element (40, 41); said valve element (43) interfering with said first and second distribution element (40, 41) in interposed position between two regions (R), where said first and second fluidic distribution element (40, 41) are fluidically connected to said reciprocally adjacent connection assemblies (15, 16, 17, 18, 19).

5. A circuit according to claim 4, **characterised in that** it comprises a plurality of said further valve elements (43), each of which is interposed between a respective pair of said reciprocally adjacent regions (R).

6. A circuit according to claim 1 or 2, of the type comprising at least two motors (13, 14), **characterised in that** it comprises a first (40') and a second pair (41') of fluidic distribution elements (50', 51'; 52', 53') of said fluid; the first said pair (40') comprising a first fluidic element (51') fluidically connected to one (36) of either said first (35) or said second line (36) of each said connection assembly (15, 16, 17, 18, 19) and to said first conduit (20) of a first motor (13), and a second fluidic element (50') fluidically connected to the other (35) of said either first (35) or second fluidic line (36) of each said connection assembly (15, 16, 17, 18, 19) and to said second conduit (21) of said first motor (13); said second pair (41') comprising a first fluidic element (53') fluidically connected to one (35) of said either first (35) or second fluidic line (36) of each said connection assembly (15, 16, 17, 18, 19) and to said first conduit (23) of a second motor (14), and a second fluidic element (52') fluidically connected to the other (36) of either said first (35) or second fluidic line (36) of each of said connection assemblies (15, 16, 17, 18, 19) and to said second conduit (24) of said second motor (14).

7. A circuit according to claim 6, **characterised in that** it comprises at least one further valve element (55') selectively available in a first and second operative position, at which respectively interrupts and allows the flow of said fluid between one of said connection assemblies (15, 16, 17, 18, 19) and said fluidic elements (50', 51'; 52', 53') of one (41') of said either first or second pair (40', 41').

8. A circuit according to claim 7, **characterised in that** it comprises a plurality of further valve elements (55') each of which is selectively available in a first and second operative position so as to respectively interrupt and allow the flow of said fluid between one relative of said connection assemblies (15, 16, 17, 18, 19) and said fluidic elements (50', 51'; 52', 53') of one (41') of said either first or second pair (40', 41').

9. A press comprising at least two mobile members (2, 3, 4, 5, 7) and a control circuit (1, 1', 1") of said mobile members (2, 3, 4, 5, 7) according to any one of the preceding claims.
